# EUROPEAN PATENT SPECIFICATION

(11) **EP 1 053 634 B1**
(45) Date of publication and mention of the grant of the patent: **02.09.2009**
(21) Application number: 99905769.8
(22) Date of filing: 04.02.1999
(51) Int. Cl.: H04N 5/00, H04N 5/775, H04N 5/44, H04N 5/445, G11B 27/30

(54) **DIGITAL BASEBAND INTERFACE FOR A DVD PLAYER**
DIGITALE BASISBANDSCHNITTSTELLE FÜR EIN DVD WIEDERGABEGERÄT
INTERFACE NUMERIQUE EN BANDE DE BASE POUR LECTEUR DE DVD

(30) Priority: 04.02.1998 US 73696 P
(43) Date of publication of application: 22.11.2000
(73) Proprietor: THOMSON CONSUMER ELECTRONICS, INC., Indianapolis, IN 46290-1024 (US)
(72) Inventor: STAHL, Thomas, A., Indianapolis, IN 46256 (US)
(74) Representative: Kohrs, Martin
(86) International application number: PCT/US1999/002498
(87) International publication number: WO 1999/040720

(56) References cited:
- EP-A- 0 701 367
- EP-A- 0 703 713
- EP-A- 0 737 009
- EP-A- 0 785 675
- EP-A- 0 833 514
- EP-A- 0 873 009
- WO-A-97/05743
- WO-A-97/10678
- WO-A-97/33433
- WO-A-99/14945
- WO-A-99/14946

## Description

### Field of the Invention

This invention concerns a method for managing the interoperability of digital devices such as a digital video disc player and a digital television interconnected via a digital bus. More particularly, the invention involves a system for processing digital video disc (DVD) subpictures by a digital television.

### Background of the Invention

Video signal processing systems that utilize storage media having digitally compressed video and audio information recorded thereon include, amongst other devices, a digital video disc player adapted to process information stored in accordance with the digital video disc (DVD) specification. The information on a DVD formatted disc is recorded as discrete packets of data, in accordance with the applicable video and audio data compression standards, wherein designated packets carry data associated with various data streams, such as alternative video angles, audio tracks, subpicture streams and navigation information. A video disc player reading a DVD formatted disc may be controlled to display certain packets of data and skip over others. A single disc may be authored to allow playback of multiple camera angles, story ending, scenes according to a ratings content, etc. DVD subpictures are used as the graphical user interface (GUI) for such features as providing the user the ability to select from one of several different videos on a disc. Using this capability, the DVD system can be used to prevent unauthorized access to information on a particular disc as well as seamlessly provide multiple variations of a video title in accordance with user commands. Current DVD players mix the decoded subpicture information with the decoded video into a single analog video signal for transport to a television.

A device such as a DVD player may be coupled to other devices, such as a display device, a video/ audio recording device, audio equipment and communicate with these other devices via a data bus. Such communication occurs in accordance with a bus protocol. Examples of bus protocols include the Consumer Electronics Bus (CEBus) and the IEEE 1394 High Performance Serial Bus. A bus protocol typically provides for communicating both control information and data. For example, CEBus control information is communicated on a "control channel" having a protocol defined in Electronics Inductries Association (EIA) specification IS-60. On an IEEE 1394 serial bus, control information is generally passed using the asynchronous services of the serial bus. Control information for a particular application can be defined using a programming language such as for example, Common Application Language (CAL) or AV/C.

EP-A-737009 (TOKYO SHIBAURA ELECTRIC CO), 9 October 1996, relates to a disk and a playback system, wherein data stored on an optical disk has data attribute associated therewith to enable optimum playback

EP-A-0703713 (SONY CORP), 27 March 1996, deals with a device for receiving and reproducing packet data having a multiplexed transport stream, in particular, but not exclusively of MPEG by using a communication control bus. WO-A-97/33433 (KOMENO JUNICHI; MATSUSHITA ELECTRIC IND CO LTD), 12 September 1997 and EP0825770 (MATSUSHITA ELECTRIC INDUSTRIAL CO LTD), 25 February 1998, disclose a picture image selecting and display device which can select a desired picture image from a plurality of picture images stored in a picture image storing means or transmitted by a simple operation without unnecessary repeated operations.

EP-A-0785675 (TOKYO SHIBAURA ELECTRIC CO), 23 July 1997, relates to a digital signal receiver capable of recording a plurality of programs transmitted by using the transport stream to one recording medium.

EP-A-0701367 (THOMSON CONSUMER ELECTRONICS), 13 February 1997, relates to a system for generating a unified program guide from a plurality of program guide sources, both analog and digital. It discloses elements for receiving different types of guide data and combining certain data to generate a combined display signal.

WO-A-9914945 and WO-A-9914946 (CHATTERJEE AMBIT KUMAR), 25 March 1999, disclose transferring OSD messages associated with a peripheral device over a digital bus.

### Summary of the Invention

This invention resides, in part, in the inventor's recognition of the below mentioned problems associated with processing the DVD subpictures and navigation control in the digital television. Today, digital video disc (DVD) players process digitally compressed video and audio information stored in accordance with the digital video disc (DVD) specification. This processing includes the conversion of the compressed digital stream to a standard signal (e.g., an NTSC or PAL signal): A remote control device or the front panel of the DVD player is used to produce a "quasi-interactive" program. That is, in response to a user command, a DVD subpicture is generated and combined with the decoded program stream prior to converting the digital stream to an NTSC signal. The DVD subpicture may be thought of as a menu identifying available user initiated options. Navigation through the program is achieved in response to selection of one of these options. Thus navigation information may be thought of as logic that is executed in response to the selection of one of the available options identified in the DVD subpicture.

Video decoding could be performed in a digital apparatus, for example, a digital television (DTV) or digital set-top box, however, it is difficult and expensive to mix the subpicture data with the video in the DVD player prior to transport to the digital apparatus. For simplicity and convenience of the comprehension, the remaining discussion of the present invention will encompass the utilization of a digital television although this invention is equally applicable for use with a digital set-top box. At present, DTVs do not support runlength encoded format that is used for DVD subpictures. The advent of digital television receivers eliminates the burden of converting the digital stream produced in a digital video disc player to an NTSC signal, thereby creating a unique ability to harness the benefit of the digital signal by processing the digital stream within the digital television. However, the additional requirement of decoding DVD subpictures and interpreting DVD navigation information in the digital television would greatly increase the cost and complexity of the digital television. This invention also resides, in part, in providing an apparatus and method for solving the described problems.

The present invention is set out in the appended claims.

### Brief Description of the Drawings

The invention may be better understood by referring to the enclosed drawing in which:
Figure 1 shows, in simplified block-diagram form, a typical digital video disc player.
Figure 2 shows, in simplified schematic block-diagram form, a system illustrating the interoperability of the digital video disc player of Figure 1 employing the present invention.
Figure 3 shows, in simplified schematic block-diagram form, an alternate embodiment of the system shown in Figure 2.

In the drawings, reference numerals that are identical in different figures indicate features that are the same or similar.

### Detailed Description of the Drawings

The use of IEEE 1394 serial bus has been suggested for many applications within a Home Network environment. It is being discussed within Video Electronics Standards Association (VESA) for use as a "whole home network." It is being built into the next generation PCs and will be used for many local peripherals including disc drives as well as digital audio/video consumer electronic devices such as digital televisions (DTVs) and digital video disc (DVD) players.

IEEE-1394 is a high speed, low cost digital serial bus developed for use as a peripheral or back-plane bus. Some of the highlights of the bus include: dynamic node address assignments, data rates of 100, 200, and 400 Mbits/sec, asynchronous and isochronous modes, fair bus arbitration, and consistency with ISO/IEC 13213.

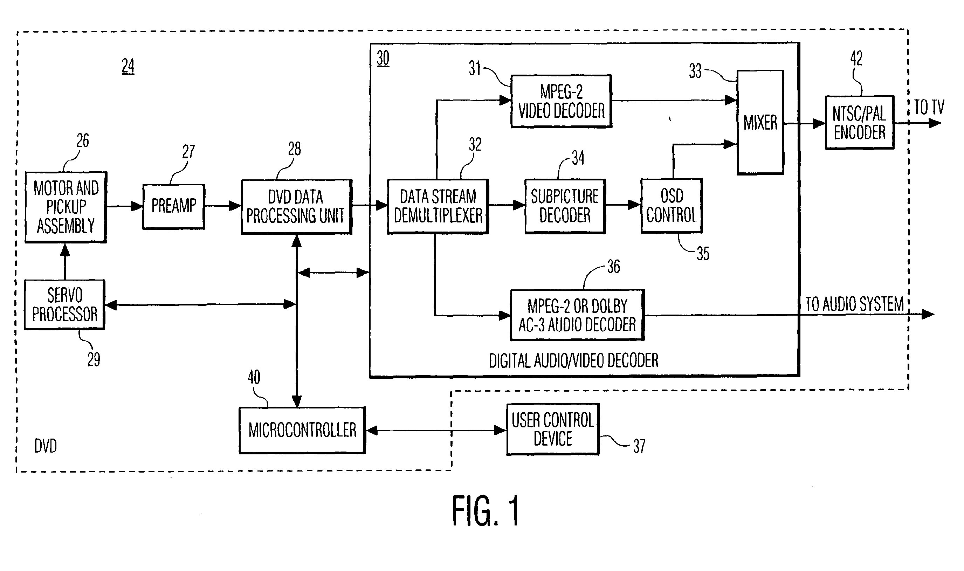

Figure 1 is a block diagram showing the basic elements of a typical digital video disc (DVD) player 24. The construction and operation of these elements are known to one of ordinary skill in the art and will not be discussed in detail here. Disc player 24 comprises motor and pickup assembly 26 which, under the control of servo processor 29, spins the disc and reads the information stored thereon. Preamp 27 and DVD data processing unit 28 translate the electrical pulses from motor and pickup assembly 26 into digital data that can be further processed by digital audio/video decoder unit 30. DVD data processing unit 28 typically performs functions such as demodulation, error correction and descrambling of the raw data read from the disc so that the data is in a suitable format for decoder unit 30. Error correction may involve data processing such as that associated with a Reed Solomon algorithm.

Decoder unit 30 receives the demodulated, error corrected and descrambled data, processes the data, and provides the appropriate video and audio signals to a display unit, such as a NTSC television set. Particularly, decoder unit 30 comprises data stream demultiplexer 32 which demultiplexes the data from data processing unit 28 into a plurality of separate data streams, including a video stream, an audio stream and a subpicture stream, and provides the data streams to their respective data decoders. Video decoder 31 receives the video stream and provides a video signal to mixer 33. Subpicture decoder 34 receives the subpicture stream and provides data to on screen display (OSD) control 35 which provides OSD video signals to mixer 33. The combined video signal from mixer 33 is provided to NTSC/PAL encoder 42 which provides a video signal that conforms to the appropriate video signal standard to a video display device, such as an NTSC television. Audio decoder 36 receives the audio streams from data stream demultiplexer 32 and provides the appropriate audio signals to an audio system.

Microcontroller 40 controls the operation of digital video disc player 24. Microcontroller 40 is coupled to user control device 37, which may comprise IR remote control devices, front panel buttons or the like, and translates data from user control device 37 to control the operation of the various elements of disc player 24 described above. Typically, microcontroller 40 is also configured to control various access features of disc player 24 including, but not limited to, parental lock out, descrambling or decryption information and navigation data. Microcontroller 40 may be embodied in various forms, including, but not limited to, a dedicated integrated circuit, or a part of a decoder/controller unit.

The combined video signal generated by mixer 3 3 may be forwarded to the digital television via an IEEE 1394 digital bus. Unfortunately, the through-put of the decoded and uncompressed video signal may degrade system operation due to the band width requirement of transferring such a video signal via a IEEE 1394 digital bus, for example, 30 frames/second X 720 horizontal pixels X 480 vertical pixels X 24 bits/pixel = 250 Mbits/second. The band width for present IEEE 1394 serial buses is typically limited to 200 Mbits/second. Even with a 400 Mbit/second serial bus, after subtracting the band width necessary for overhead, transferring such decoded and uncompressed video signals would be difficult. For comparison purposes, such a bandwidth correlates to about one-sixth the size of a decoded HDTV signal. As described in further detail below, the present invention resides in part in recognition of this problem, and in part, in identifying a solution thereto.

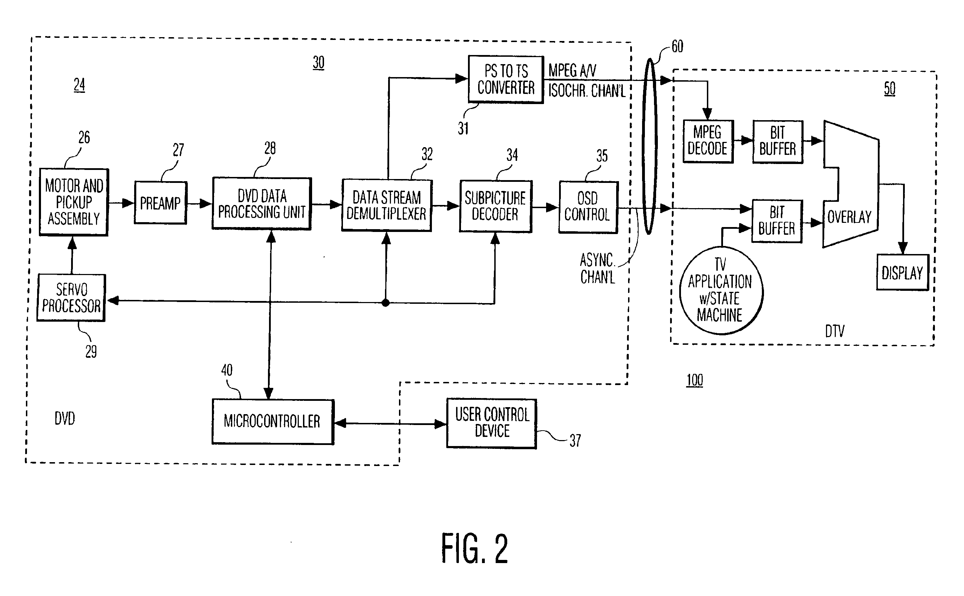

Today's digital televisions provide many benefits for digital video processing. Figure 2 defines a system 100 for providing interoperability between DVD player 24 and digital television (DTV) 50 via an IEEE 1394 serial bus 60. In such a system 100, interoperability may be achieved by transferring the compressed MPEG stream from DVD player 24 to an MPEG decoder integral with DTV 50. Transferring DVD subpictures from DVD player 24 to a DTV 50 can be achieved using one of several formats. For example, a subset of HTML without the navigation features may be used to describe the OSD. Another possibility is to use a run-length-encoding format which is similar to the DVD subpicture format. However, the preferred embodiment involves transferring the actual information in an OSD bit-map format. For example, an 8 bit/pixel, full screen, 640X480 OSD can be transferred in about 100 msecs utilizing 10% of the bandwidth of the 200 Mbit/sec IEEE 1394 serial bus.

Converting DVD subpictures to an OSD bit-map format and transferring the OSD bit-map subpicture directly from DVD player 24 to DTV 50 via an asynchronous channel of serial bus 60, for example, utilizing a "Pull" method, is described below. DVD player 24 processes the digitally compressed video and audio information stored on the video disc thereby generating a digital stream in an MPEG-PS (program stream) format. In one embodiment of the present invention the MPEG-PS stream is first converted to an MPEG-TS (transport stream) format by PS to TS Converter 39. The MPEG-TS audio/video digital stream is transferred to DTV 50 utilizing an isochronous channel of IEEE 1394 serial bus 60. The OSD bit-map subpicture is not transferred as a composite compressed MPEG video stream but is transferred as a bit-mapped OSD where the OSD may be overlayed in DTV 50 with the decoded MPEG audio/video stream prior to being displayed.

Transferring compressed MPEG-TS data via the digital bus eliminates the throughput and processing problems. The digital television may contain an MPEG Audio/Video Decoder which will be utilized for decoding the MPEG-TS stream. The user will still directly interface with DVD player 24 utilizing the respective user control device 37 (i.e., front panel or remote control). The responses of such user interaction is handled within DVD player 24 by decoding the MPEG sub-pictures and generating a bit-map subpicture OSD. The bit-map OSD may be transferred via an asynchronous channel of IEEE 1394 serial bus 60 to the OSD buffer located in DTV 50. The bit-mapped image is overlayed, within the digital television, with the decoded video MPEG signal. The combined (or overlaid) signal is then displayed.

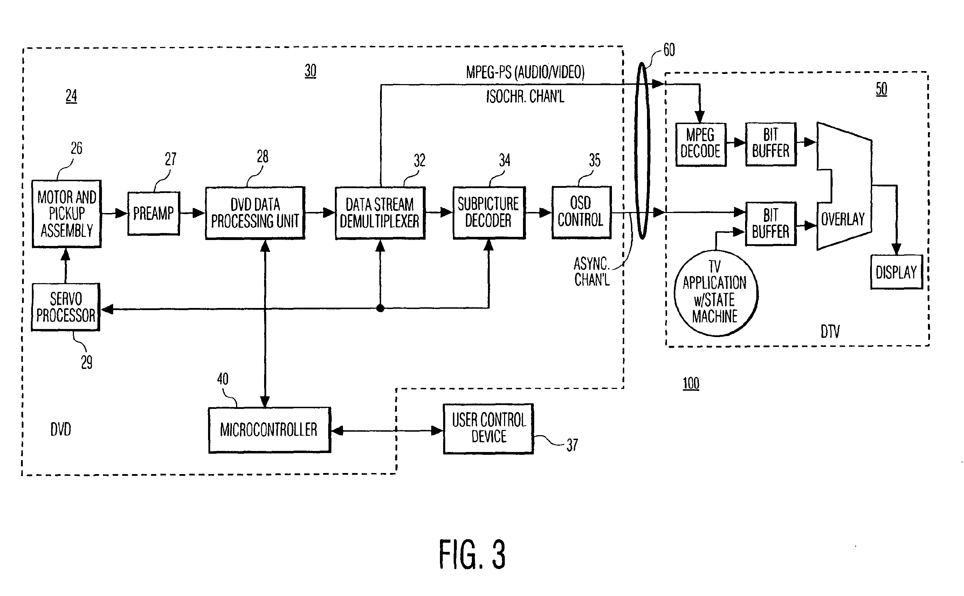

Figure 3 shows an alternate embodiment of the present invention wherein the MPEG-PS stream is directly decoded by the MPEG decoder in the DTV. MPEG-PS streams require less processing power than MPEG-TS streams; thus broadcast decoders with sufficient packet buffers that utilize software for demultiplexing could be programmed to directly decode MPEG-PS streams. Thus, PS to TS Converter 39 is not required. The audio/video content stream in an MPEG-PS format is transferred over an isochronous channel of IEEE 1394 serial bus 60 to an MPEG decoder in DTV 50.

Utilizing a bit-map format for transfer of DVD subpictures allows (1) the DVD manufacturer to maintain the "look and feel" of the subpicture, (2) for freedom in the generation of the subpicture and (3) for dynamic updates (i.e. partial screen or even single pixel updates are possible). Compared to compressed representations, the bit-map representation requires less processing time to display because displaying such bit-mapped subpictures requires minimal interpretation and manipulation. Descriptive approaches, such as HTML, have a disadvantage of being difficult to specify and upgrade for typical consumer products.

To simplify the transfer of bit-mapped subpictures, a "Pull" method is preferably utilized. With this method, the bulk of the bit-map data is transferred from DVD player 24 to DTV 50 using the asynchronous channel of the IEEE 1394 digital bus. DTV 50 reads the bit-map data from the memory of the peripheral device (i.e., DVD player) by making use of at least one block read transaction of IEEE 1394. The display device is informed of the location and size of the bit-map data via a "trigger" command which is sent from DVD player 24 to DTV 50 when the DVD player 24 is ready to begin transferring data.

Other alternatives for transferring subpictures from DVD player 24 to DTV 50 include; (1) an asynchronous push method which primarily uses IEEE 1394 asynchronous write transactions initiated by DVD player 24 to write the bit-map data into DTV 50, (2) an isochronous transport method for broadcasting the bit-map data over one of the isochronous channels provided by IEEE 1394, (3) an asynchronous stream method for carrying the subpictures and (4) alternately, the bit-map data could be provided via a 8 VSB-T(trellis) or 16 VSB RF remodulated channel.

Once the subpicture is ready for transfer, DVD 24 sends a trigger message to DTV 50. A unique trigger message 22 may be utilized for each subpicture. Initiation of a block transfer usually occurs through the use of a trigger message from DVD 24 to DTV 50. A queue may be implemented in the display device so that trigger messages are processed in the same order in which they are received.

After a trigger message is received from the target, the OSD module in DTV 50 requests memory accesses (i.e., asynchronous reads) starting at the memory location specified in the trigger message. The display device reads all of the information associated with the subpicture and begins to construct the actual bit-map image. At the same time, it informs DVD 24 that the block has been read so that DVD 24 may free up any memory it had allocated to the transfer of this data block.
This subpicture is then displayed. DTV's 50 OSD controller (not shown) uses this data to construct the OSD and mix it with the decoded MPEG video in DTV 50.

The time required for transfer of bit-map data through the digital bus may be calculated as follows. For example all the data required for a 640x480 OSD with 4 bits/pixel requires 1,228,800 bits. All of this data can be transferred in about 150 ms assuming a 100 Mb/sec bus, a packet payload of 512 Bytes and assuming that we can transmit one packet each 500µsec. This time decreases even further when one takes into account that no OSD takes up this much space. Using only a quarter (typical) of the entire screen results in roughly 40 ms transfer time. Small updates can be on the order of a few milliseconds.

### Application Control Languages

In order for a consumer electronic device to interact with other devices interconnected via a IEEE 1394 serial bus, a common set of commands must be defined. Three standard approaches for device modeling and control are CAL, AV/C and the approach adopted for the Universal Serial Bus (USB).

The design of control languages is based on the assumption that all consumer electronic products have a hierarchical structure of common parts or functions. CAL and AV/C are control languages that distinguish between logical and physical entities. For example, a television (i.e., a physical entity) may have a number of functional components (i.e., logical entities) such as a tuner, audio amplifier, etc. Such control languages provide two main functions: Resource allocation and Control. Resource allocation is concerned with requesting, using and releasing Generic Network resources. Message and control are transported by the FCP as defined in IEC-61883 and discussed above. For example. CAL has adopted an object base methodoloy for its command syntax. An object contains and has sole access to a set number of internal values known as instance variables (IV). Each object keeps an internal list of methods. A method is an action that an object takes as a result of receiving a message. When a method is invoked, one or more IVs are usually updated. A message may include a method identifier followed by zero or more parameters. When an object receives a method, it looks through its list of methods for one which matches the method identified in the message. If found, the method will be executed. The parameters supplied with the message determine the exact execution of the method.

For a CAL implementation, all devices that are capable of displaying OSDs must implement the following OSD object. This object assumes Asynchronous PULL with trigger message approach. This object would be carried in the trigger message from DVD 24 to DTV 50. Digital television 50 would then pull the menu by reading it from DVD's 24 bus mapped memory space. The response of this request will be used by DVD 24 as an indication that the display device has read these update blocks.

**OSD Update Trigger Object**

| *2* | *OSD Update Trigger Object* | | | | *(16) Data Memory* |
|---|---|---|---|---|---|
| | *The object is used for triggering the OSD mechanism in display capable devices.* | | | | |
| | IV | R/W | Type | Name | Context Function |
| | a (61) | R | Numeric | size_of_block | size of "memory_block" in bytes (default value = 10) |
| | b (62) | R | Numeric | length_of_record | length of current_record in bytes (default value = 10) |
| | C (43) | R/W | Numeric | current_index | current record block pointed to (default value = 0) |
| | I (6C) | R/W | Data ( ) | memory_block | In each record. 6 MSBs contain the offset and LSB contains the OSD_type, remaining 3 bytes represent the length of OSD in bytes. |

Although the exemplary embodiment is described with reference to a digital video apparatus adapted to read compressed video and audio data from a disc and to process the data in accordance with the DVD specification, it is to be understood that the present invention may be used in any video processing apparatus capable of processing digital video and audio information, wherein program related information included with the video and audio information can be used to selectively restrict the playback of certain video and audio information on the disc.

While the invention has been described in detail with respect to numerous embodiments thereof, it will be apparent that upon a reading and understanding of the foregoing, numerous alterations to the described embodiment will occur to those skilled in the art and it is intended to include such alterations within the scope of the appended claims. For example, the invention has been described with respect to DVD players, however this invention is equally applicable to any digital device processing at least one stream of compressed digital data.

## Claims

1. A method for operating a digital video processing apparatus (DTV) in combination with a digital video disc player (DVD), comprising the steps of:
(a) the digital video processing apparatus receiving from said digital video disc player, via a digital bus (60), a program content stream representative of a video program stored on a disk in said digital video disc player, said program content stream including data in a compressed format;
(b) decoding said program content stream in said digital video processing apparatus; **characterized by**:
(c) the digital video processing apparatus receiving from said digital video disc player, via said digital bus, bit-map data representative of a subpicture associated with said program content stream, said bit-map data being suitable for display; and
(d) combining, in said digital video processing apparatus, said bit-map data received from said digital video disc player and said decoded program content stream to produce a signal representative of a combined image suitable for display.

2. The method of Claim 1 further **characterized by** the digital video processing apparatus performing the steps of:
(a) receiving subsequent bit-map data representative of an updated portion of said previously received subpicture; and
(b) updating, in response to a user initiated command received by said digital video disc player, said combined image with said received subsequent bit-map data to produce an updated combined image suitable for display.

3. A method for operating a digital video disc player interconnected by a digital bus to a digital video processing apparatus, the digital video disc player performing the steps of:
(a) receiving from a digital video disc coupled thereto an MPEG-PS digital stream;
(b) converting said digital stream from an MPEG-PS format to a digital stream having an MPEG-TS format; and
(c) transmitting said MPEG-TS digital stream to said digital video processing apparatus via an isochronous channel of said digital bus, **characterized by**:
(d) processing a subpicture stream associated with said MPEG-PS digital stream to generate a bit-mapped digital data suitable for display; and
(e) transmitting said bit-mapped digital data to said digital video processing apparatus via an asynchronous channel of said digital bus.

4. The method of claim 3 further **characterized by**:
(a) receiving a user initiated command in response to said displayed bit-mapped digital data;
(b) generating an updated subpicture stream in response to said user initiated command;
(c) processing said updated subpicture stream to generate an updated bit-mapped digital data; and
(d) transmitting said updated bit-mapped digital data.

5. The method according to claim 1, wherein said digital bus comprises an IEEE 1394 compliant bus, said prog ram content stream is received via an isochronous transfer mechanism, and said bit map data is received via an asynchronous transfer mechanism.

6. A digital video disk apparatus, comprising:
means for receiving from a digital disk coupled thereto a program stream;
means for transmitting the program stream to a digital video processing apparatus connected thereto via a digital bus, **characterized by**
means for receiving from the digital disk a subpicture stream associated with the program stream, and processing the subpicture stream to generate bit-mapped data suitable for display;
means for transmitting the bit-mapped data to the digital video processing apparatus via the digital bus.

7. The digital video disk apparatus according to claim 6, wherein the receiving means receives an MPEG-PS digital stream, further **characterized by**
means for converting the digital stream from an MPEG-PS format to a digital stream having an MPEG-TS format, the transmitting means transmitting the digital stream having the MPEG-TS format to the digital video processing apparatus.

8. The digital video disk apparatus according to claim 7, **characterized in that** the MPEG-TS stream is transmitted via an isochronous channel of the digital bus, and the bit-mapped data is transmitted via an asynchronous channel of the digital bus.

9. The digital video disk apparatus according to any one of the claims 6 to 8, further
**characterized by**
means for generating an updated subpicture stream in response to a user initiated command; and means for processing the updated subpicture stream to generate an updated bit-mapped data, and transmitting the updated bit-mapped data to the video processing apparatus.

10. A digital video processing system, comprising:
a digital video disk apparatus (DVD) interconnected by a digital bus to a digital video processing apparatus (DTV), wherein the digital video disk apparatus includes:
means for receiving from a digital disk coupled thereto a program content stream;
means for transmitting the program content stream to the digital video processing apparatus via the digital bus;
means for receiving from the digital disk a subpicture stream associated with the program stream, and processing the subpicture stream to generate bit-mapped data suitable for display; and
means for transmitting the bit-mapped digital data to the digital video processing apparatus via the digital bus, and
the digital video processing apparatus (DTV) includes:
means for receiving from the digital video disk apparatus, via the digital bus, the program content stream including data in a compressed format;
means for decoding the program content stream;
means for receiving from the digital video disk apparatus, via the digital bus, the bit-map data representative of the subpicture; and
means for combining the bit-map data received from the digital video disk apparatus and the decoded program content stream to produce a signal representative of a combined image suitable for display.

11. The system of claim 10, wherein the program content stream comprises a digital stream converted from an MPEG-PS format to a digital stream having an MPEG-TS format.

12. The system according to any of the claims 10 to 11, wherein the digital video disk apparatus transmits the program content stream via an isochronous channel of the digital bus, and transmits the bit-mapped data via an asynchronous channel of the digital bus.

13. The system according to any of the claims 10 to 12, wherein the digital video disk apparatus further includes means for generating an updated subpicture stream in response to a user initiated command; and means for processing the updated subpicture stream to generate an updated bit-mapped data, and transmitting the updated bit-mapped data to the digital video processing apparatus.

## Patentansprüche

1. Verfahren zum Betreiben eines digitalen Videoverarbeitungsgerätes (DTV) in Kombination mit einem Digital-Video-Disc-Wiedergabegerät (DVD), die nachfolgenden Schritte umfassend:
(a) das digitale Videoverarbeitungsgerät empfängt von dem Digital-Video-Disc-Wiedergabegerät, über einen digitalen Bus (60), einen Programminhaltsstrom, der für ein Videoprogramm repräsentativ ist, das auf einer Disc in dem Digital-Video-Disc-Wiedergabegerät gespeichert ist, wobei der Programminhaltsstrom Daten in einem komprimierten Format umfasst;
(b) Decodieren des Programminhaltsstromes in dem digitalen Videoverarbeitungsgerät, **gekennzeichnet durch**:
(c) das digitale Videoverarbeitungsgerät empfängt von dem Digital-Video-Disc-Wiedergabegerät, über den digitalen Bus, Bitmap-Daten, die für ein Unterbild repräsentativ sind, das mit dem Programminhaltsstrom verknüpft ist, wobei die Bitmap-Daten zur Anzeige geeignet sind, und
(d) Kombinieren, in dem digitalen Videoverarbeitungsgerät, der Bitmap-Daten, die von dem Digital-Video-Disc-Wiedergabegerät empfangen werden, und des decodierten Programminhaltsstromes, um ein Signal zu produzieren, das für ein kombiniertes Bild repräsentativ ist, welches zur Anzeige geeignet ist.

2. Verfahren nach Anspruch 1, ferner **dadurch gekennzeichnet, dass** das digitale Videoverarbeitungsgerät die nachfolgenden Schritte durchführt:
(a) Empfangen von folgenden Bitmap-Daten, die für einen aktualisierten Bereich des zuvor empfangenen Unterbildes repräsentativ sind, und
(b) Aktualisieren, als Reaktion auf einen von einem Benutzer ausgelösten Befehl, der durch das Digital-Video-Disc-Wiedergabegerät empfangen wird, des kombinierten Bildes mit den empfangenen folgenden Bitmap-Daten, um ein aktualisiertes kombiniertes Bild zu produzieren, das zur Anzeige geeignet ist.

3. Verfahren zum Betreiben eines Digital-Video-Disc-Wiedergabegerätes, das durch einen digitalen Bus mit einem digitalen Videoverarbeitungsgerät zusammengeschaltet ist, wobei das Digital-Video-Disc-Wiedergabegerät die nachfolgenden Schritte durchführt:
(a) Empfangen eines digitalen MPEG-PS-Stromes von einer Digital-Video-Disc, die damit gekoppelt ist;
(b) Konvertieren des digitalen Stromes von einem MPEG-PS-Format zu einem digitalen Strom, der ein MPEG-TS-Format aufweist, und
(c) Übertragen des digitalen MPEG-TS-Stromes an das digitale Videoverarbeitungsgerät über einen isochronen Kanal des digitalen Busses, **gekennzeichnet durch**:
(d) Verarbeiten eines Unterbild-Stromes, der mit dem digitalen MPEG-PS-Strom verknüpft ist, um bitadressierte digitale Daten zu erzeugen, die zur Anzeige geeignet sind, und
(e) Übertragen der bitadressierten digitalen Daten an das digitale Videoverarbeitungsgerät über einen asynchronen Kanal des digitalen Busses.

4. Verfahren nach Anspruch 3, ferner **gekennzeichnet durch**:
(a) Empfangen eines vom Benutzer ausgelösten Befehles als Reaktion auf die angezeigten bitadressierten digitalen Daten;
(b) Erzeugen eines aktualisierten Unterbild-Stromes als Reaktion auf den vom Benutzer ausgelösten Befehl;
(c) Verarbeiten des aktualisierten Unterbild-Stromes, um aktualisierte bitadressierte digitale Daten zu erzeugen, und
(d) Übertragen der aktualisierten bitadressierten digitalen Daten.

5. Verfahren nach Anspruch 1, wobei der digitale Bus einen IEEE 1394 kompatiblen Bus umfasst, wobei der Programminhaltsstrom über einen isochronen Übertragungsmechanismus empfangen wird und die Bitmap-Daten über einen asynchronen Übertragungsmechanismus empfangen werden.

6. Digital-Video-Disc-Gerät, umfassend:
Mittel zum Empfangen eines Programmstromes von einer damit gekoppelten digitalen Disc;
Mittel zum Übertragen des Programmstromes an ein damit verbundenes digitales Videoverarbeitungsgerät über einen digitalen Bus, **gekennzeichnet durch**
Mittel zum Empfangen eines Unterbild-Stromes von der digitalen Disc, der mit dem Programmstrom verknüpft ist, und zum Verarbeiten des Unterbild-Stromes, um bitadressierte Daten zu erzeugen, die zur Anzeige geeignet sind;
Mittel zum Übertragen der bitadressierten Daten an das digitale Videoverarbeitungsgerät über den digitalen Bus.

7. Digital-Video-Disc-Gerät, nach Anspruch 6, wobei die Empfangsmittel einen digitalen MPEG-PS-Strom empfangen, ferner **gekennzeichnet durch**
Mittel zum Konvertieren des digitalen Stromes von einem MPEG-PS-Format zu einem digitalen Strom, der ein MPEG-TS-Format aufweist, wobei die Übertragungsmittel den digitalen Strom, der das MPEG-TS-Format aufweist, an das digitale Videoverarbeitungsgerät übertragen.

8. Digital-Video-Disc-Gerät nach Anspruch 7, **dadurch gekennzeichnet, dass** der MPEG-TS-Strom über einen isochronen Kanal des digitalen Busses übertragen wird, und die bitadressierten Daten über einen asynchronen Kanal des digitalen Busses übertragen werden.

9. Digital-Video-Disc-Gerät nach irgendeinem der Ansprüche 6 bis 8, ferner **gekennzeichnet durch**
Mittel zum Erzeugen eines aktualisierten Unterbild-Stromes als Reaktion auf einen vom Benutzer ausgelösten Befehl; und Mittel zum Verarbeiten des aktualisierten Unterbild-Stromes, um aktualisierte bitadressierte Daten zu erzeugen, und zum Übertragen der aktualisierten bitadressierten Daten an das Videoverarbeitungsgerät.

10. Digitale Videoverarbeitungsanlage, umfassend:
ein Digital-Video-Disc-Gerät (DVD), das durch einen digitalen Bus mit einem digitalen Videoverarbeitungsgerät (DTV) zusammengeschaltet ist, wobei das Digital-Video-Disc-Gerät enthält:
Mittel zum Empfangen eines Programminhaltsstromes von einer damit gekoppelten digitalen Disc;
Mittel zum Übertragen des Programminhaltsstromes an das digitale Videoverarbeitungsgerät über den digitalen Bus;
Mittel zum Empfangen eines Unterbild-Stromes von der digitalen Disc, der mit dem Programmstrom verknüpft ist, und zum Verarbeiten des Unterbild-Stromes, um bitadressierte Daten zu erzeugen, die zur Anzeige geeignet sind, und
Mittel zum Übertragen der bitadressierten digitalen Daten an das digitale Videoverarbeitungsgerät über den digitalen Bus, und
wobei das digitale Videoverarbeitungsgerät (DTV) enthält:
Mittel zum Empfangen, von dem Digital-Video-Disc-Gerät über den digitalen Bus, des Programminhaltsstromes, der Daten in einem komprimierten Format umfasst;
Mittel zum Decodieren des Programminhaltsstromes;
Mittel zum Empfangen, von dem Digital-Video-Disc-Gerät über den digitalen Bus, der Bitmap-Daten, die für das Unterbild repräsentativ sind, und
Mittel zum Kombinieren der Bitmap-Daten, die von dem Digital-Video-Disc-Gerät empfangen werden, und des decodierten Programminhaltsstromes, um ein Signal zu produzieren, das für ein kombiniertes Bild repräsentativ ist, welches zur Anzeige geeignet ist.

11. Anlage nach Anspruch 10, wobei der Programminhaltsstrom einen digitalen Strom umfasst, der von einem MPEG-PS-Format zu einem digitalen Strom konvertiert wird, der ein MPEG-TS-Format aufweist.

12. Anlage nach irgendeinem der Ansprüche 10 bis 11, wobei das Digital-Video-Disc-Gerät den Programminhaltsstrom über einen isochronen Kanal des digitalen Busses überträgt und die bitadressierten Daten über einen asynchronen Kanal des digitalen Busses überträgt.

13. Anlage nach irgendeinem der Ansprüche 10 bis 12, wobei das Digital-Video-Disc-Gerät ferner Mittel zum Erzeugen eines aktualisierten Unterbild-Stromes als Reaktion auf einen vom Benutzer ausgelösten Befehl und Mittel zum Verarbeiten des aktualisierten Unterbild-Stromes, um aktualisierte bitadressierte Daten zu erzeugen, und zum Übertragen der aktualisierten bitadressierten Daten an das digitale Videoverarbeitungsgerät enthält.

## Revendications

1. Procédé pour le fonctionnement d'un appareil de traitement vidéo numérique (DTV) en association avec un lecteur de disque vidéo numérique (DVD), comprenant les étapes suivantes :
(a) réception, par l'appareil de traitement vidéo numérique, à partir dudit lecteur de disque vidéo numérique, via un bus numérique (60), d'un flux de contenu de programme représentant un programme vidéo stocké sur un disque dudit lecteur de disque vidéo numérique, ledit flux de contenu de programme incluant des données dans un format compressé ;
(b) décodage dudit flux de contenu de programme dans ledit appareil de traitement vidéo numérique ; **caractérisé par** :
(c) la réception, par l'appareil de traitement vidéo numérique, à partir dudit lecteur de disque vidéo numérique, via ledit bus numérique, de données bitmap représentant une sous-image associée audit flux de contenu de programme, lesdites données bitmap étant adaptées pour un affichage et
(d) la combinaison, dans ledit appareil de traitement vidéo numérique, desdites données bitmap reçues dudit lecteur de disque vidéo numérique et dudit flux de contenu de programme décodé afin de produire un signal représentant une image combinée adaptée pour un affichage.

2. Procédé selon la revendication 1, **caractérisé en outre par** la réalisation des étapes suivantes par l'appareil de traitement vidéo numérique :
(a) réception de données bitmap consécutives représentant une partie mise à jour de ladite sous-image précédemment reçue et
(b) mise à jour, en réponse à une commande initiée par l'utilisateur et reçue par ledit lecteur de disque vidéo numérique, de ladite image combinée avec lesdites données bitmap consécutives reçues afin de produire une image combinée mise à jour adaptée pour un affichage.

3. Procédé pour le fonctionnement d'un lecteur de disque vidéo numérique interconnecté par un bus numérique à un appareil de traitement vidéo numérique, le lecteur de disque vidéo numérique réalisant les étapes suivantes :
(a) réception, à partir d'un disque vidéo numérique qui lui est couplé, d'un flux numérique MPEG-PS ;
(b) conversion dudit flux numérique à partir d'un format MPEG-PS en un flux numérique possédant un format MPEG-TS et
(c) transmission dudit flux numérique MPEG-TS audit appareil de traitement vidéo numérique via un canal isochrone dudit bus numérique, **caractérisé par** :
(d) le traitement d'un flux de sous-images associé audit flux numérique MPEG-PS afin de générer des données numériques pixélisées adaptées pour un affichage et
(e) la transmission desdites données numériques pixélisées audit appareil de traitement vidéo numérique via un canal asynchrone dudit bus numérique.

4. Procédé selon la revendication 3, **caractérisé en outre par** :
(a) la réception d'une commande initiée par l'utilisateur en réponse auxdites données numériques pixélisées affichées ;
(b) la génération d'un flux de sous-images mis à jour en réponse à ladite commande initiée par l'utilisateur ;
(c) le traitement dudit flux de sous-images mis à jour afin de générer des données numériques pixélisées mises à jour et
(d) la transmission desdites données numériques pixélisées mises à jour.

5. Procédé selon la revendication 1, où ledit bus numérique comprend un bus conforme à la norme IEEE 1394, ledit flux de contenu de programme est reçu via un mécanisme de transfert isochrone et lesdites données bitmap sont reçues via un mécanisme de transfert asynchrone.

6. Appareil de disque vidéo numérique comprenant :
un moyen de réception, à partir d'un disque numérique qui lui est couplé, d'un flux de programme ;
un moyen de transmission du flux de programme à un appareil de traitement vidéo numérique qui lui est connecté via un bus numérique, **caractérisé par**
un moyen de réception, à partir du disque numérique, d'un flux de sous-images associé au flux de programme, et de traitement du flux de sous-images afin de générer des données pixélisées adaptées pour un affichage ;
un moyen de transmission des données pixélisées à l'appareil de traitement vidéo numérique via le bus numérique.

7. Appareil de disque vidéo numérique selon la revendication 6, où le moyen de réception reçoit un flux numérique MPEG-PS, **caractérisé en outre par**
un moyen de conversion du flux numérique à partir d'un format MPEG-PS en un flux numérique possédant un format MPEG-TS, le moyen de transmission transmettant le flux numérique possédant le format MPEG-TS à l'appareil de traitement vidéo numérique.

8. Appareil de disque vidéo numérique selon la revendication 7, **caractérisé en ce que** le flux MPEG-TS est transmis via un canal isochrone du bus numérique et que les données pixélisées sont transmises via un canal asynchrone du bus numérique.

9. Appareil de disque vidéo numérique selon une quelconque des revendications 6 à 8, **caractérisé en outre par**
un moyen de génération d'un flux de sous-images mis à jour en réponse à une commande initiée par l'utilisateur et un moyen de traitement du flux de sous-images mis à jour afin de générer des données pixélisées mises à jour et de transmission des données pixélisées mises à jour à l'appareil de traitement vidéo.

10. Système de traitement vidéo numérique, comprenant :
un appareil de disque vidéo numérique (DVD) interconnecté par un bus numérique à un appareil de traitement vidéo numérique (DTV), où l'appareil de disque vidéo numérique inclut :
un moyen de réception, à partir d'un disque numérique qui lui est couplé, d'un flux de contenu de programme ;
un moyen de transmission du flux de contenu de programme à l'appareil de traitement vidéo numérique via le bus numérique ;
un moyen de réception, à partir du disque numérique, d'un flux de sous-images associé au flux de programme et de traitement du flux de sous-images afin de générer des données pixélisées adaptées pour un affichage et
un moyen de transmission des données numériques pixélisées à l'appareil de traitement vidéo numérique via le bus numérique et
l'appareil de traitement vidéo numérique (DTV) inclut :
un moyen de réception, à partir de l'appareil de disque vidéo numérique, via le bus numérique, du flux de contenu de programme incluant des données dans un format compressé ;
un moyen de décodage du flux de contenu de programme ;
un moyen de réception, à partir de l'appareil de disque vidéo numérique, via le bus numérique, des données bitmap représentant la sous-image et
un moyen de combinaison des données bitmap reçues de l'appareil de disque vidéo numérique et du flux de contenu de programme décodé afin de produire un signal représentant une image combinée adaptée pour un affichage.

11. Système selon la revendication 10, où le flux de contenu de programme comprend un flux numérique converti à partir d'un format MPEG-PS en un flux numérique possédant un format MPEG-TS.

12. Système selon une quelconque des revendications 10 à 11, où l'appareil de disque vidéo numérique transmet le flux de contenu de programme via un canal isochrone du bus numérique et transmet les données pixélisées via un canal asynchrone du bus numérique.

13. Système selon une quelconque des revendications 10 à 12, où l'appareil de disque vidéo numérique inclut en outre un moyen de génération d'un flux de sous-images mis à jour en réponse à une commande initiée par l'utilisateur et un moyen de traitement du flux de sous-images mis à jour afin de générer des données pixélisées mises à jour et de transmission des données pixélisées mises à jour à l'appareil de traitement vidéo numérique.
